**Europäisches Patentamt**

**European Patent Office**

**Office européen des brevets**

(19)

(11) Veröffentlichungsnummer: **0 181 435**

**B1**

(12) # EUROPÄISCHE PATENTSCHRIFT

(45) Veröffentlichungstag der Patentschrift:
**13.01.88**

(21) Anmeldenummer: **85108020.0**

(22) Anmeldetag: **28.06.85**

(51) Int. Cl.⁴: **F 27 D 21/02**

(54) Einrichtung zum Beobachten des Innenraumes von unter erhöhtem Druck stehenden Heissreaktionsräumen.

(30) Priorität: **13.11.84 DE 3441346**

(43) Veröffentlichungstag der Anmeldung:
**21.05.86 Patentblatt 86/21**

(45) Bekanntmachung des Hinweises auf die Patenterteilung:
**13.01.88 Patentblatt 88/2**

(84) Benannte Vertragsstaaten:
**BE DE FR GB IT LU NL**

(56) Entgegenhaltungen:
**DE-B-1 483 122**

(73) Patentinhaber: **Krupp Koppers GmbH, Altendorfer Strasse 120, D-4300 Essen 1 (DE)**

(72) Erfinder: **Köhnen, Klaus, Dipl.- Ing., An den Buchen 33, D-4330 Mülheim/Ruhr (DE)**
Erfinder: **Niermann, Hans, Ing., Wickenburgstrasse 58, D-4300 Essen 1 (DE)**
Erfinder: **Semrau, Lothar, Ing., Savignystrasse 23, D-4300 Essen 1 (DE)**

EP 0 181 435 B1

LIBER, STOCKHOLM 1988

**Beschreibung**

Einrichtung zum Beobachten des Innenraumes von unter erhöhtem Druck stehenden Heißreaktionsräumen.

Die Erfindung betrifft eine Einrichtung zum Beobachten des Innenraumes von unter erhöhtem Druck stehenden Heißreaktionsräumen.

Es ist häufig erforderlich, in Heißreaktionsräumen, beispielsweise solchen zur Vergasung feinzerteilter fester Brennstoffe in der Schwebe, die Ausprägung, Farbe und Größe der Flammen sowie die unter Umständen anfallende flüssige oder feste Schlacke unter Beobachtung zu halten. Wird der Gaserzeuger unter erhöhtem Druck, beispielsweise von 30 bar oder mehr, betrieben, so ist die Beobachtungseinrichtung nicht nur den im Gaserzeuger herrschenden hohen Temperaturen ausgesetzt, sondern sie muß auch eine zuverlässige Abdichtung des Innenraumes des Gaserzeugers gegenüber der Atmosphäre gewährleisten. Es muß ferner sichergestellt werden, daß die unter diesen hohen Belastungen stehenden Glasprismen der Beobachtungseinrichtung bei einem Schadensfall keine gesundheitlichen Schäden für den Beobachter hervorrufen können.

Der Erfindung liegt daher die Aufgabe zugrunde, eine Beobachtungseinrichtung zu schaffen, die den vorerwähnten Anforderungen in zuverlässiger Weise entspricht.

Die erfindungsgemäße Beobachtungseinrichtung ist gekennzeichnet durch ein in der Achse der Beobachtungsöffnung des Heißreaktionsraumes außen an diesen Raum anschließendes Gehäuse mit darin befindlichem Spiegel, der die aus der Beobachtungsöffnung austretenden Lichtstrahlen in einen unter einem Winkel zur Achse der Beobachtungsöffnung an das Gehäuse angesetzten Betrachtungsstutzen lenkt, wobei sowohl im Bereich des Überganges vom Gehäuse zu dem unter Druck stehenden Raum als auch im Betrachtungsstutzen ein Glasprisma dichtend eingesetzt ist. Eine bevorzugte Ausführungsform der Erfindung sieht vor, daß der Betrachtungsstutzen unter einem Winkel von 90° zur Achse der Beobachtungsöffnung angeordnet ist.

Durch die erfindungsgemäße Maßnahme wird erreicht, daß bei einer möglichen Zerstörung des zum Druckraum hin angeordneten Glasprismas, das, wie bereits erwähnt, unter einer hohen Druck- und Temperaturbelastung steht, Glassplitter nicht auf das Betrachtungs-Glasprisma treffen und dieses ebenfalls zerstören können, wodurch Verletzungen des beobachtenden Personals eintreten könnten.

Gemäß einem weiteren Vorschlag der Erfindung ist der Spiegel mittels einer außen am Gehäuse angesetzten Betätigungseinrichtung verstellbar, so daß er in die jeweils gewünschte Beobachtungsposition gebracht werden kann.

Es ist ferner vorgesehen, daß das zum Druckraum hin angeordnete Glasprisma druckseitig zwecks Beseitigung von Staubablagerungen mit einem gasförmigen Spülmedium beaufschlagbar ist.

Um eine Kondensation infolge Taupunktunterschreitung im Gehäuse zu vermeiden, kann weiterhin eine Beheizung für das Gehäuse vorgesehen werden.

Ein weiteres Merkmal der Erfindung besteht darin, daß an das Gehäuse ein Druckentlastungsstutzen mit einer darin angeordneten Berstscheibe angesetzt ist. Die Berstscheibe wird man für einen Berstdruck auslegen, der unterhalb des Betriebsdruckes des Gaserzeugers liegt, so daß im Störfall im Gehäuse ein Druckaufbau in Höhe des Betriebsdruckes nicht eintreten kann. Überdies steht diese Druckbeaufschlagung im Störfall nur kurzzeitig an, da gemäß einem weiteren Vorschlag der Erfindung dem Gehäuse ein motorbetätigtes Absperrorgan vorgeschaltet ist, das ein Signal zum Schließen von einem in der Druckentlastungsleitung angeordneten Druckmeßgerät mit Meßumformer erhält.

Schließlich kann in der Druckentlastungsleitung eine Atmungsleitung mit eingebauter Lochblende als Umgangsleitung zur Berstscheibe vorgesehen sein.

Die Erfindung ist in den Zeichnungen beispielsweise veranschaulicht. Es zeigen:

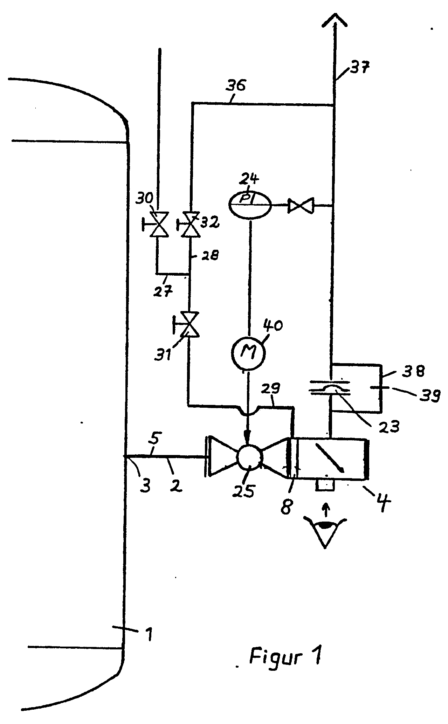

Fig. 1 die Anordnung der Beobachtungseinrichtung an einem Heißreaktionsraum und

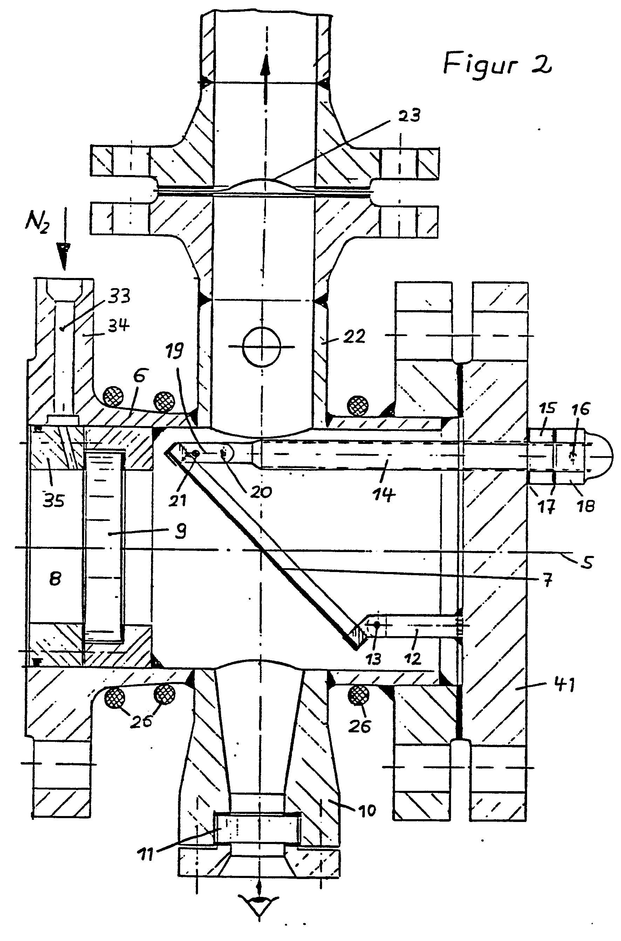

Fig. 2 einen Schnitt durch die Beobachtungseinrichtung.

Mit 1 ist der unter erhöhtem Druck stehende Heißreaktionsraum bezeichnet, an den ein Stutzen 2 angesetzt ist, der die Beobachtungsöffnung 3 bildet. 4 ist die in der Achse 5 der Beobachtungsöffnung angeordnete Beobachtungseinrichtung. Diese wird von einem Gehäuse 6 gebildet, in dem sich ein Spiegel 7 befindet.

Gegen den mit dem Heißreaktionsraum in Verbindung stehenden Druckraum 8 ist das Gehäuse 6 durch das dichtend eingesetzte Glasprisma 9 begrenzt. Unter einem Winkel von 90° ist an das Gehäuse ein Beobachtungsstutzen 10, der ebenfalls mit einem Glasprisma 11 versehen ist, angesetzt. Die Betrachtung des Inneren des Heißreaktionsraumes erfolgt also über die beiden Glasprismen 9 und 11, wobei die aus dem Heißreaktionsraum austretenden Lichtstrahlen durch den Spiegel 7 zum Beobachtungsstutzen hin abgelenkt werden.

Der Spiegel kann mittels einer Betätigungseinrichtung in die gewünschte Beobachtungsstellung gebracht werden. Hierzu ist der Spiegel in zwei Halterungen gelagert. Eine dieser Halterungen ist als Feststütze 12 mit dem Deckel 41 verschweißt und mit einem Drehgelenk 13 ausgeführt. Die andere Halterung besteht aus einer Spindel 14, die mittels einer Mutter 15 bzw. mittels eines durch die Bohrung 16 durchgesteckten Knebels verstellt werden kann. Die Spindel ist zur Atmosphäre hin durch Dichtungen 17 und die Hutmutter 18 abgedichtet. Mit dem Spiegel 7 ist die Spindel 14 über ein Gelenkstück 19 mit den Gelenken 20, 21 verbunden.

Die Lichtstrahlumlenkung durch den Spiegel 7 erfolgt, wie bereits erwähnt, aus Sicherheitsgründen, da das Glasprisma 9 sowohl einer hohen Temperatur- als auch einer Druckbelastung ausgesetzt ist und bei dieser Art der Belastung ein Zerspringen des Glasprismas nicht völlig ausgeschlossen werden kann. Durch die um 90° versetzte Anordnung des Beobachtungs-Glasprismas 11 wird verhindert, daß im Falle einer Zerstörung des Glasprismas 9 dessen Splitter gegen das Glasprisma 11 geschleudert werden und dieses dadurch ebenfalls zerstört wird. Der Spiegel 7 ist hierbei so auszuführen, daß er im Schadensfall nicht als Splitter-Reflektor wirkt, sondern auch zerstört wird. Es ist daher ein Spiegel aus Glas oder einer Matallfolie einzusetzen.

An das Gehäuse 6 ist ferner ein Druckentlastungsstutzen 22 mit einer darin angeordneten Berstscheibe 23 angesetzt. Diese Maßnahme verhindert bei einer Zerstörung des Glasprismas 9 einen zu starken Druckanstieg im Gehäuse 6, der auch zu einer Zerstörung des Glasprismas 11 führen könnte. Dieser Druck besteht im übrigen nur kurze Zeit, da aufgrund der Druckmessung in der Druckentlastungsleitung 37 durch das Meßgerät 24 bei einem Druckanstieg über einem Meßumformer 40 ein Signal an das dem Gehäuse 6 vorgelagerte Absperrorgan 25 gegeben wird, so daß dieses schließt.

Gegen Taupunktunterschreitungen, die zu einem Feuchtigkeitsbeschlag des Spiegels 7 und der Glasprismen 9 und 11 führen könnten und damit eine Funktionsbeeinträchtigung der Beobachtungseinrichtung darstellen würden, ist eine mit 26 angedeutete elektrische Beheizungseinrichtung vorgesehen. Zusätzlich kann man Silikagel in das Gehäuse 6 einbringen, um diesem die Feuchtigkeit zu entziehen.

Um das Glasprisma 9 druckseitig sauber zu halten, ist eine Spülung mit einem gasförmigen Medium, vorzugsweise mit $N_2$, vorgesehen. Dieses Spülmedium wird über die Zuführungsleitungen 27, 28 und 29 bei geöffneten Absperrorganen 30 und 31 und geschlossenem Absperrorgan 32 zu einer Spülbohrung 33 im Flansch 34 des Gehäuses geführt und von dort über den Spülring 35 mit scharfem Strahl auf das Glasprisma geleitet.

Das Spülsystem kann ferner dazu benutzt werden, bei einem Abbau des Gehäuses 6 von dem geschlossenen Absperrorgan 25 den Druckraum 8 zu entspannen. Hierzu wird das Absperrorgan 30 geschlossen, während die Absperrorgane 31 und 32 geöffnet sind. Nun kann die Druckentspannung über den Spülring 35, die Bohrung 33, die Leitungen 29, 28 und 36 und schließlich über die in die Atmosphäre führende Leitung 37 des Druckentlastungsstutzens 22 erfolgen.

Es empfiehlt sich auch, nach jedem Beobachtungsvorgang den Druckraum 8 zwischen Absperrorgan 25 und Glasprisma 9 zu entspannen, um nicht ständig das Glasprisma mit dem Druck des Heißreaktionsraumes zu belasten.

Schließlich ist noch eine dünne Atmungsleitung 38 mit eingebauter Lochblende 39 vorgesehen, welche die Teile der Leitung 37 unterhalb und oberhalb der Berstscheibe 23 miteinander verbindet. Durch diese Maßnahme soll vermieden werden, daß sich durch eventuelle geringe Leckagen am Glasprisma 9 ein Gasdruck innerhalb des Gehäuses 6 aufbaut.

## Patentansprüche

1. Einrichtung zum Beobachten des Innenraumes von unter erhöhtem Druck stehenden Heißreaktionsräumen, mit einem in der Achse (5) der Beobachtungsöffnung (3) des Heißreaktionsraumes (1) außen an diesen Raum (1) anschließenden Gehäuse (6) mit darin befindlichem Spiegel (7), der die aus der Beobachtungsöffnung austretenden Lichtstrahlen in einen unter einem Winkel zur Achse der Beobachtungsöffnung an das Gehäuse angesetzten Betrachtungsstutzen (10) lenkt, wobei sowohl im Bereich des Übergangs vom Gehäuse zu dem unter Druck stehenden Raum (8) als auch im Betrachtungsstutzen ein Glasprisma (9 bzw. 11) dichtend eingesetzt ist.

2. Einrichtung nach Anspruch 1, dadurch gekennzeichnet, daß der Betrachtungsstutzen (10) unter einem Winkel von 90° zur Achse (5) der Beobachtungsöffnung (3) angeordnet ist.

3. Einrichtung nach Anspruch 1, dadurch gekennzeichnet, daß der Spiegel (7) mittels einer außen am Gehäuse (6) angesetzten Betätigungseinrichtung (14, 15, 16) verstellbar ist.

4. Einrichtung nach Anspruch 1, dadurch gekennzeichnet, daß das zum Druckraum (8) hin angeordnete Glasprisma (9) druckseitig zwecks Beseitigung von Staubablagerungen mit einem gasförmigen Spülmedium beaufschlagbar ist.

5. Einrichtung nach Anspruch 1, dadurch gekennzeichnet, daß das Gehäuse (6) zwecks Vermeidung von Kondensation infolge Taupunktunterschreitung beheizbar ist.

6. Einrichtung nach Anspruch 1, dadurch gekennzeichnet, daß an das Gehäuse (6) ein Druckentlastungsstutzen (22) mit einer darin angeordneten Berstscheibe (23) angesetzt ist.

7. Einrichtung nach Anspruch 1, dadurch gekennzeichnet, daß dem Gehäuse (6) ein motorbetätigtes Absperrorgan (25) vorgeschaltet ist, das ein Signal zum Schließen von einem in der Druckentlastungsleitung (37) angeordneten Druckmeßgerät (24) mit Meßumformer (40) erhält.

8. Einrichtung nach Anspruch 1, dadurch gekennzeichner, daß in der Druckentlastungsleitung (37) eine Atmungsleitung (38) mit eingebauter Lochblende (39) als Umgangsleitung zur Berstscheibe (23) vorgesehen ist.

## Claims

1. Device for observing the interior of hot reaction spaces which are under elevated pressure, with a housing (6) on the axis (5) of the observation opening (3) of the hot reaction space (1), the housing (6) being connected to the outside of this space (1) and containing a mirror (7) which directs the rays of light emerging from the observation opening into an inspection port (10) placed at an angle to the axis of the observation opening in the housing, in which, both at the region of the transition from the housing to the pressurised space (8), and also at the inspection port, a glass prism (9 or 11 respectively) is mounted as a seal.

2. Device according to Claim 1, characterised in that the inspection port (10) is placed at an angle of 90° to the axis (5) of the observation opening (3).

3. Device according to Claim 1, characterised in that the mirror (7) can be adjusted by means of an operating device (14, 15, 16) placed outside the housing (6).

4. Device according to Claim 1, characterised in that for the purpose of removing deposits of dust a gaseous scavenging medium can be admitted to the pressure side of the glass prism (9) which is placed in the pressurised space (8).

5. Device according to Claim 1, characterised in that the housing (6) can be heated to avoid condensation caused by the temperature falling below the dew point.

6. Device according to Claim 1, characterised in that the housing (6) has a pressure-relieving connection (22) which contains a rupture disk (23).

7. Device according to Claim 1, characterised in that a motor-operated shut-off device (25) is placed in front of the housing (6) and receives a signal to close from a pressure measuring instrument (24) with transducer (40), which is placed in the pressure relief line (37).

8. Device according to Claim 1, characterised in that the pressure relief line (37) is provided with a vent pipe (38) with integral orifice (39) as a bypass line for the rupture disk (23).

## Revendications

1. Dispositif pour l'observation de l'intérieur d'espaces réactionnels chauds se trouvant sous pression élevée, muni d'une enveloppe (6) se raccordant extérieurement à l'espace réactionnel chaud (1), dans l'axe (5) de l'ouverture d'observation (3) de celui-ci et dans laquelle se trouve un miroir (7) qui dirige les rayons lumineux, sortant de l'ouverture d'observation, dans un embout d'observation (10) raccordé à l'enveloppe en faisant un angle avec l'axe de l'ouverture d'observation, un prisme en verre (9, 11) étant inséré de façon étanche aussi bien dans la région de transition de l'enveloppe à l'espace sous pression (8) que dans l'embout d'observation.

2. Dispositif selon la revendication 1, caractérisé par le fait que l'embout d'observation (10) est disposé sous un angle de 90° par rapport à l'axe (5) de l'ouverture d'observation (3).

3. Dispositif selon la revendication 1, caractérisé par le fait que le miroir (7) est réglable au moyen d'un dispositif d'actionnement (14, 15, 16) raccordé extérieurement à l'enveloppe (6).

4. Dispositif selon la revendication 1, caractérisé par le fait que le prisme en verre (9) disposé vers l'espace de pression (8) peut être soumis du côté de pression à l'action d'un agent de lavage gazeux en vue d'éliminer les dépôts de poussière.

5. Dispositif selon la revendication 1, caractérisé par le fait que l'enveloppe (6) peut être chauffée en vue d'éviter une condensation due à une température inférieure au point de rosée.

6. Dispositif selon la revendication 1, caractérisé par le fait qu'à l'enveloppe (6) est raccordée une tubulure de décharge de pression (22) dans laquelle est disposé un disque d'éclatement (23).

7. Dispositif selon la revendication 1, caractérisé par le fait qu'avant l'enveloppe (6) est interposé un organe d'isolement actionné par moteur qui reçoit, d'un instrument de mesure de pression (24) avec convertisseur de mesure (40) disposé dans le tuyau de décharge de pression (37), un signal pour la fermeture.

8. Dispositif selon la revendication 1, caractérisé par le fait que dans le tuyau de décharge de pression (37) est prévu un tuyau de respiration (38) avec diaphragme incorporé (39), comme tuyau de dérivation évitant le disque d'éclatement (23).

Figur 1

0 181 435

Figur 2

3